# EUROPÄISCHE PATENTSCHRIFT

(11) **EP 2 766 286 B1**
(45) Veröffentlichungstag und Bekanntmachung des Hinweises auf die Patenterteilung: **02.11.2016**
(21) Anmeldenummer: 12756662.8
(22) Anmeldetag: 06.09.2012
(51) Int. Cl.: B65G 47/84, B65G 51/03, B67C 7/00

(54) **TRANSFERSTERN**
TRANSFER STARWHEEL
ROUE DE TRANSFERT EN ÉTOILE

(30) Priorität: 11.10.2011 DE 102011115512
(43) Veröffentlichungstag der Anmeldung: 20.08.2014
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2012/003734
(87) Internationale Veröffentlichungsnummer: WO 2013/053417

(56) Entgegenhaltungen:
- EP-B1- 1 883 594
- WO-A1-2008/129346
- US-B1- 6 446 781
- US-B2- 6 889 823

## Beschreibung

Die Erfindung betrifft einen Transferstern, welcher Behälter, wie Flaschen oder dergleichen, an einer Übernahme von einer ersten Behälterbehandlungsvorrichtung übernimmt und entlang einer Transportbahn zu einer Übergabe transportiert, an welcher der jeweilige Behälter an eine zweite Behälterbehandlungsvorrichtung übergeben wird, wobei eine Vielzahl von Übertragungselementen vorgesehen sind.
Aus der DE 195 42 647 C2 ist eine Transportvorrichtung zur Änderung der Teilung von in einer Spur geführten Getränkebehältern bekannt, bei der mittels eines linear ausgerichteten und Mitnehmer aufweisenden Transportbandes der Behälterabstand verändert und auf ein weiteres Transportband geführt werden kann.
Die DE 10 2009 018 733 A1 offenbart eine Behälterübergabevorrichtung zwischen zwei mit Behälterklammern ausgestatteten Sterntransporteuren. Dabei erfolgt die Übergabe der Behälter zwischen den Transportsternen durch ein Aneinanderlegen der offenen Enden der Behälterklammern und einer Führungsschiene zum Überführen der Behälter von einer Behälterklammer des ersten Transportsterns in eine Behälterkammer des zweiten Transportsterns.

Ein Transferstern kann zum Beispiel Behälter entlang einer Kreisbahn von der ersten Behälterbehandlungsvorrichtung zur zweiten Behälterbehandlungsvorrichtung transferieren. Die Übergabe und Übernahme sind in Aufsicht gesehen bevorzugt gegenüberliegend an dem Transferstern angeordnet. Die Behälterbehandlungsvorrichtungen sind in der Sternbauart ausgeführt sein, wobei die erste Behälterbehandlungsanlage zum Beispiel als Füllstern (Füller) und die zweite Behälterbehandlungsanlage als Verschließstern (Verschließer) ausgeführt sein kann. Der Transferstern transportiert also beispielhaft mit Produkt gefüllte Behälter von dem Füllstern zum Verschließstern.

Üblicherweise sind die Behälterbehandlungsanlagen in Ihrem Durchmesser größer als der Transferstern, bzw. als die Umlenkvorrichtungen des Linearförderers, so dass die Drehzahl der Vorrichtungen sowohl an der Übergabe als auch an der

Übernahme bevorzugt so gewählt wird, dass gleiche Umfangsgeschwindigkeiten herrschen. Den beispielhaften Ausgestaltungen ist also gemeinsam, dass am Übergabe- bzw. Übernahmepunkt eine aufeinander abgestimmte Geschwindigkeit vorliegen sollte, also gleiche oder annähernd gleiche Umfangsgeschwindigkeit, so dass eine Übergabe an den Verschließstern bzw. eine Übernahme von dem Füllstern reibungslos und ohne Komplikationen erfolgen kann.

Gleichwohl erfolgt die Übergabe bzw. die Übernahme nicht ruckfrei, da die Zentrifugalbeschleunigung schlagartig die Wirkrichtung ändert und bei Wechsel von großem zu kleinem Sterndurchmesser zusätzlich im Betrag zunimmt. Dadurch kann das in dem Behälter eingefüllte Gut bzw. Produkt, beispielsweise eine Flüssigkeit aus dem Behälter schwappen. Schwappt jedoch Produkt aus dem Behälter verschmutzt dies nicht nur die Anlage, was zu einem erhöhten Reinigungsbedarf führt. Zudem könnte der Behälter anschließend einen zu geringen Produktspiegel aufweisen, wodurch der Behälter mitsamt dem eingefüllten Produkt in einer nachfolgenden Inspektion aussortiert würde.

Weiter erfahren die Behälter eine erhebliche Kreisbeschleunigung, was sich auf den Produktspiegel des eingefüllten Produktes negativ auswirkt. Beispielsweise könnte Flüssigkeit eingefüllt sein, welche der wirkenden Rotationskraft nach außen folgt, so dass sich ein schräg gestellter Flüssigkeitsspiegel einstellt, wobei auch dabei ein Ausschwappen beobachtet wird. Dies wiederum führt ebenso zu nicht vollständig gefüllten Flaschen.

Von daher liegt der Erfindung die Aufgabe zugrunde, eine Vorrichtung der eingangs genannten Art unter Vermeidung zumindest vorgenannter Nachteile zu verbessern.

Erfingdungsgemäß wird die Aufgabe durch eine Vorrichtung mit den Merkmalen des Anspruchs 1 gelöst, wobei vorteilhaft Ausführungsformen in den Unteransprüchen beschrieben sind.

Zielführend ist eine Transportbahn vorgesehen, welche mindestens eine innere Führungsschiene und eine äußere Führungsschiene umfasst, zwischen welchen die Behälter hängend und gleitend führ- und transportierbar sind, wobei an der Übernahme der Behälter ein erster linearer Transportbahnabschnitt vorgesehen ist und wobei ein Behälter beim Transport auf der Transportbahn relativ zu dessen jeweiligen Übertragungselement mindestens radial verschiebbar ist. Dieser so bezeichnete "lineare Transportbahnabschnitt" umfasst einen geraden Bahnabschnitt (kein Radius bzw. "unendlich große" Radius) und/oder einen Bahnabschnitt mit einem Radius, welcher wesentlich größer ist, als der Außenradius des Transfersterns selbst. Bei der erfindungsgemäßen Vorrichtung ist auch vorteilhaft, dass die Behälter an der Übernahme eine Bewegungsbahn entlang eines ersten linearen Transportbahnabschnitt aufweisen, und an der Übergabe eine Bewegungsbahn entlang eines zweiten linearen Transportbahnabschnittes aufweisen, wobei die Behälter zwischen dem ersten und zweiten linearen Transportbahnabschnitt eine Bewegungsbahn entlang eines radialen Transportbahnabschnittes aufweisen. Es wird somit vorteilhafterweise erreicht, dass die Behälter einer optimierten Bewegungsbahn bzw. Transportbahn folgen, die einen mathematisch stetigen bzw. allmählichen Wechsel der Wirkung der Zentrifugalkraft erzielt. Zwischen dieser Übernahme und auch Abgabe kann eine lineare oder auch eine kreisförmige Bewegungsbahn bzw. Transportbahn sein.

An der Übernahme des Transfersterns werden die Behälter von der ersten Behälterbehandlungsanlage übernommen. An der Übergabe des Transfersterns werden die Behälter an die zweite Behälterbehandlungsanlage übergeben.

Wie bereits angeführt, ist zielführend im Sinne der Erfindung, dass der Behälter in dem Transferstern entlang einer Bahn mit einem allmählichen Richtungswechsel bei der Übergabe bewegt wird, so dass eine ruckfreie Übernahme bzw. Übergabe, bzw. ein allmählicher Wechsel der Wirkung der Zentrifugalkraft erreicht ist. Dieses verhindert ein Überschwappen eingefüllten Produktes aus dem Behälter.

Eine solche Bahn bei der Übergabe kann zum Beispiel in Form einer 2Πperiodischen Bahn, beispielsweise in Form von Sinuskurven oder auch einer Parabelfunktion folgen. Bei beiden Ausführungen können erfindungsgemäß lineare Transportbahnabschnitte zwischen Übernahme und Übergabe vorgesehen sein, wobei ebenso eine Kurvenbahn von Übernahme bis Übergabe möglich ist.

Günstig ist, wenn der Transferstern in umlaufender Bauart radial verstellbare Greif- und Haltelemente aufweist, so dass die Behälter der zuvor beschriebenen, quasi weichen Bahn folgen können.

Das jeweilige Übertragungselement ist als Aufnahmegabel ausgeführt, an welcher die Behälter entlang gleiten können. Hierbei dienen die Gabelzinken zum Antrieb und Bewegen der Behälter auf der Bewegungs- bzw. Transportbahn.

Bekannt ist, dass die Behälter einen so genannten Neckring aufweisen. In besonders vorteilhafter Ausgestaltung sind die Behälter mit ihren Neckringen auf einer Kurve gleitend zwangsgeführt, wobei Übertragungselemente, die beispielsweise als Gabelzinken ausgeführt sind, die Behälter auf dem vorgegebenen Bewegungsweg, bzw. der oben beschriebene Transportbahn bewegen.

Zweckmäßig ist, wenn die Übertragungselemente elastische Zinken bzw. Gabelzinken aufweisen, welche bevorzugt aus einem elastischen Kunststoff oder auch Gelenken bestehen. Die Elastizität der Gabelzinken kann einem Beruhigen des eingefüllten Gutes weiter zuträglich und hilfreich sein, weil die Gabelzinken bei der Übernahme und Übergabe ausweichen können, also quasi federartig nachgeben, um sich ebenso federartig weich in die Ausgangslage zurückzustellen.

Die Übertragungselemente rotieren bevorzugt mit der Winkelgeschwindigkeit, mit der sich eine Umfangsgeschwindigkeit der übrigen Behälterbehandlungsvorrichtungen wie z.B. Füller oder Verschließer einstellt.

Günstig ist, wenn das als Aufnahmegabel ausgeführte Übertragungselement drehbar ist und/oder schwenkbar gelagert ist, passiv durch die Behälter bewegt wird oder auch aktiv gesteuert wird, was auch durch eine zusätzliche Steuerung erreichbar ist.

In einer vorteilhaften Ausgestaltung sind die Greif- und Haltelemente als eine Art Schiene ausgeführt, welche den Neckring der Flasche trägt oder die eine Nut aufweisen, in welche der Neckring der Flasche eingeschoben werden kann. In diesem Fall trägt das Greif- und Halteelement den Behälter.

Möglich ist auch, dass die Behälter von radial beweglichen oder teleskopartigen Übertragungselementen wie etwa den zuvor erwähnten Gabelzinken bewegt werden. Diese können kurvengesteuert ein- und ausgefahren werden. Alternativ können die Gabelzinken aber auch radial feststehend sein.

Wie bereits erwähnt, wirken zumindest entlang des radialen Transportbahnabschnittes Fliehkräfte auf das in dem jeweiligen Behälter eingefüllte Produkt, also zum Beispiel auf die eingefüllte Flüssigkeit. Durch die wirkenden Fliehkräfte wird eine entsprechende Schrägstellung des Flüssigkeitsspiegels bewirkt, welche wiederum die Gefahr eines Ausschwappens birgt. Um dem entgegen zu treten, schlägt die Erfindung vor, dass die Bahnkurven und/oder die Übertragungselemente eine Bahnüberhöhung aufweisen, so dass dem Behälter zwangsweise eine gegen die Fliehkräfte gegengerichtete Schrägstellung aufgezwungen wird. So wird erreicht, dass beispielsweise der Flüssigkeitsspiegel trotz der wirkenden Fliehkräfte relativ zum Behälter betrachtet in der waagerechten verbleibt.

Die Bahnüberhöhung kann vorteilhaft, wie auch die Transportbahn der Behälter selbst, durch eine Hub- und Steuerkurve erreicht werden, welche Hub- und Steuerkurve von dem jeweiligen Greif- und Haltelement überfahren wird. Die Hub- und Steuerkurve kann, wie auch die Transportbahn der Behälter in einem Steuergerät abgelegt sein, bzw. jeweils generiert werden, welche ein entsprechendes Steuersignal an das Greif- und Haltelement leitet, um auch die erforderliche Schrägstellung an die jeweils herrschende Zentripetalkraft zu erreichen. Die Verstellung könnte jeweils motorisch erfolgen. Das Greif- und Haltelement kann dabei jeweils um einen Drehpunkt herum verschwenkt werden, um die erforderliche Schrägstellung zu erreichen.

Durch die Schrägstellung können also vorteilhaft Schwappverluste vermieden werden.

Die Erfindung ist besonders zweckmäßig bei einem Transferstern einsetzbar, welche einem Füller nachgeschaltet ist, welcher also gefüllte, aber unverschlossene Behälter entlang der Transportbahn transportiert. Natürlich soll das genannte Beispiel der Behälterbehandlungsanlagen als Füller und Schließer nicht beschränkend sein.

Weitere vorteilhafte Ausgestaltungen der Erfindung sind in den Unteransprüchen und der folgenden Figurenbeschreibung offenbart. Es zeigen
- Fig. 1: ein Transferstern mit Bewegungsbahn der Behälter in einer Aufsicht,
- Fig. 2: der Transferstern aus Figur 1 in einer Vergrößerung, mit einer Transportbahn,
- Fig. 3: der Transferstern aus Figur 1 mit einer beispielhaften Transportbahn,
- Fig. 4: der Transferstern aus Figur 1 als Einzelheit, und
- Fig. 5: eine perspektivische Ansicht auf einen Transferstern als Ausschnitt

In den unterschiedlichen Figuren sind gleiche Teile stets mit denselben Bezugszeichen versehen, weswegen diese in der Regel auch nur einmal beschrieben und in den Figuren lediglich einmal eingetragen werden.

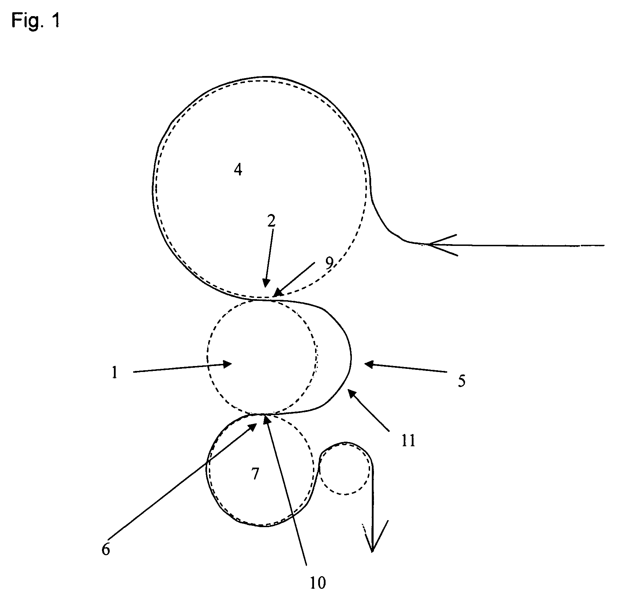

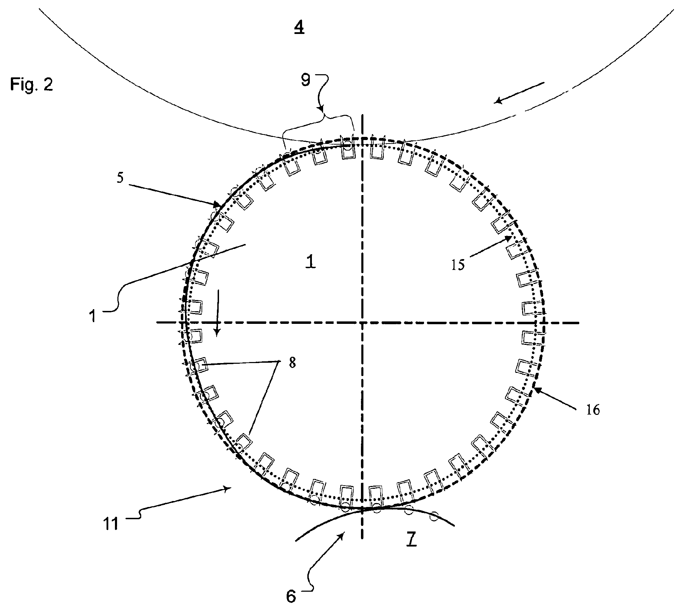

Figur 1 zeigt einen Transferstern 1. Der Transferstern 1 übernimmt an einer Übernahme 2 Behälter 3 aus einer ersten Behälterbehandlungsanlage 4, und transportiert die Behälter 3 entlang einer Transportbahn 5 zu einer Übergabe 6, an welcher die Behälter 3 an eine zweite Behälterbehandlungsanlage 7 übergeben werden. Die Behälter 3 sind in den Figuren 2 bis 4 lediglich in Aufsicht auf den Mündungsbereich erkennbar. Die erste Behälterbehandlungsanlage 4 weist, wie angedeutet einen größeren Durchmesser auf, als der Transferstern 1. Die zweite Behälterbehandlungsanlage 7 weist beispielhaft einen zum Transferstern 1 gleichen Durchmesser auf, kann aber auch einen unterschiedlichen Durchmesser, z.B. einen größeren Durchmesser aufweisen.

An dem Transferstern 1 sind mehrere Übertragungselemente 8 (Figuren 2 bis 4) vorgesehen, welche eine kombinierte Funktion als Führungs-, Greif- und Halteelement erfüllen. Die Behälter 3 können beispielsweise PET-Flaschen sein, was natürlich nicht einschränkend sein soll.

Vorteilhaft ist vorgesehen, dass die Behälter 3 an der Übernahme 2 eine Bewegungsbahn mit einem allmählichen Richtungswechsel der Transportbahn 5 aufweisen, einem nachfolgend als linearer Transportbahnabschnitt 9 bezeichneter Abschnitt der Transportbahn.

In analoger Weise kann ebenfalls an der Übergabe 6 eine Bewegungsbahn entlang eines zweiten linearen Transportbahnabschnitts 10 vorgesehen sein, die ebenfalls einen allmählichen Richtungswechsels der Transportbahn sicherstellt. Hierbei werden die Behälter 3 zwischen dem ersten linearen Transportbahnabschnitt 9 und dem zweiten linearen Transportbahnabschnitt 10 entlang einer Bewegungsbahn geführt, die einen radialen Transportbahnabschnitt 11 aufweisen kann, wobei die Kurvenbahn mit dem allmählichen Richtungswechsel in einer alternativen Ausführungsform auch kontinuierlich von der Übernahme 2 bis zur Übergabe 6 verlaufen kann.

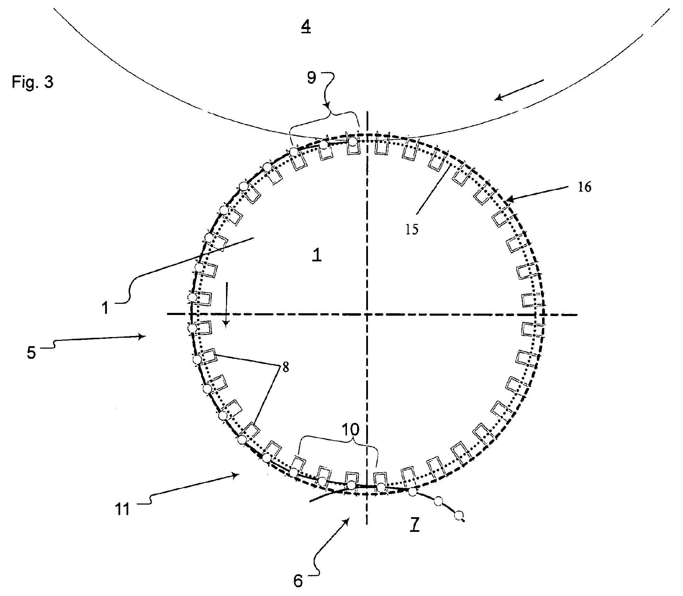

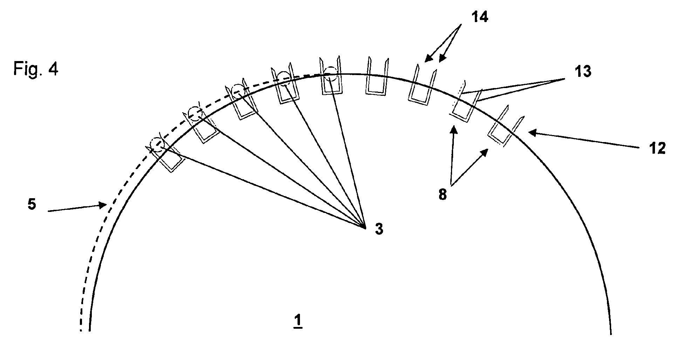

Eine solche Transportbahn bei der Übergabe kann zum Beispiel in Form einer 2Π-periodischen Bahn, beispielsweise in Form von Sinuskurven oder auch einer Parabelfunktion folgen. Bei beiden Ausführungen können erfindungsgemäß lineare Transportbahnabschnitte zwischen Übernahme und Übergabe vorgesehen sein, wobei ebenso eine Kurvenbahn von Übernahme bis Übergabe möglich ist. In den Figuren 2 und 3 ist ein Transferstern 1 in einer Vergrößerung und in Figur 4 als Einzelheit dargestellt. Der Transferstern 1 weist die Übertragungselemente 8 auf, welche als Aufnahmegabeln 12 ausgeführt sind und zum Bewegen der Behälter dienen. Die jeweiligen Aufnahmegabeln 12 weisen Gabelzinken 13 auf.

Figur 2 zeigt eine mögliche Ausführung einer Bahnkurve, bei welcher der Behälter 3 auf dem Teilkreisdurchmesser des Transfersterns 1 aufgenommen wird, wobei sich der Bahnradius im anfänglichen Verlauf vergrößert nachfolgend allmählich wieder auf den Teilkreisdurchmesser reduziert und dann wieder vergrößert, um dadurch einen weichen, allmählichen Richtungswechsel in die benachbarte Behälterbehandlungsanlage, wie beispielsweise einen Füller oder Verschließerstern, zu erreichen.

In der Ausführungsvariante gemäß Figur 2 ist die Transportbahn 5 sowie geführte Behälters 3 in der Draufsicht dargestellt. Erkennbar ist, dass der Behälter 3 im Bereich der Übernahme 2 mittig in der Aufnahmegabel 12 aufgenommen ist. Der oben definierte lineare Transportbahnabschnitt 9 schließt sich an, wobei der Behälter 3 mittels der Steuerkurve zwangsgeführt und durch die Aufnahmegabeln 12 angetrieben, in Richtung zu den Zinkenspitzen 14, also radial nach außen, bewegt wird. In Überlagerung mit der Rotation des Transfersterns 1 ergibt sich so der lineare Transportbahnabschnitt 9. Dabei wird der Behälter 3 quasi von einer inneren Umlaufbahn 15 radial wegorientiert bewegt. Die Transportbahn 5 gelangt in etwa nach einer 90° Rotation des Transfersterns 1 wieder auf die innere Umlaufbahn 15 und verlässt diese nach einer Rotation von etwa weiteren 45° nach außen orientiert in Richtung zur Übergabe 6. Die Transportbahn 5 des Behälters wird also in Zusammenspiel der Zwangsführung des Behälters 3 über die Steuerkurve bzw. über die Halskurve und der Rotation des Transfersterns 1 erreicht. Im Bereich der Übergabe 6 sind die Behälter 3 zu den Zinkenspitzen 14 orientiert.

Nicht gezeigt, aber vorteilhafterweise vorzusehen, ist bei dem Transfersterns 1 nach Figur 2 an der Übergabe 6 eine zweiter linearer Transportbahnabschnitts 10 (analog Ausführungsbeispiel nach Figur 3), wozu die Behälter 3 von der inneren Umlaufbahn 15 radial nach außen zu den Zinkenspitzen 14 geführt werden, so dass sich der weiche Kurvenverlauf des zweiten linearen Transportbahnabschnitts 10 entlang der Bewegungsbahn ergibt.

Bei der in Figur 3 dargestellten Transportbahn 5 des Behälters 3 wird dieser zunächst entlang des ersten linearen Transportbahnabschnittes 9 von der inneren Umlaufbahn 15 auf die äußere Umlaufbahn 16 befördert, welche sodann für die weitere Rotation des Transfersterns 1 beibehalten wird, wobei an der Übergabe 6 eine Bewegungsbahn entlang eines zweiten linearen Transportbahnabschnitts 10 vorgesehen ist, in welchem der Behälter 3 von der äußeren Umlaufbahn 16 radial nach innen zur Mitte der Gabelzinken 13 geführt wird, so dass sich der weiche Kurvenverlauf des zweiten linearen Transportbahnabschnitts 10 entlang der Bewegungsbahn ergibt.

In Figur 4 ist lediglich prinzipiell ein Teilabschnitt der Transportbahn 5 im Detail gezeigt.

In möglichen Ausgestaltungen können noch Maßnahmen zur Schrägstellung der Behälter 3 getroffen werden, um der auf die Flüssigkeit wirkenden Zentripetalkraft entgegen zu wirken, so dass der Flüssigkeitsspiegel im Behälter 3 quasi horizontal ist. Wie Figur 2 weiter zeigt, entspricht die innere Umlaufbahn 15 in etwa einer Kreisbahn des mittleren Bereiches der Aufnahmegabeln 12, wobei die Zinkenspitzen 14 naturgemäß auf einer äußeren Umlaufbahn 16 angeordnet sind. In dem beispielhaften Ausführungsbeispiel ist die Transportbahn 5 von den Umlaufbahnen 15 und 16 begrenzt. Denkbar ist, die innere Umlaufbahn 15 und/oder 16 vom Durchmesser gesehen kleiner und/oder größer auszuführen als beispielhaft dargestellt.

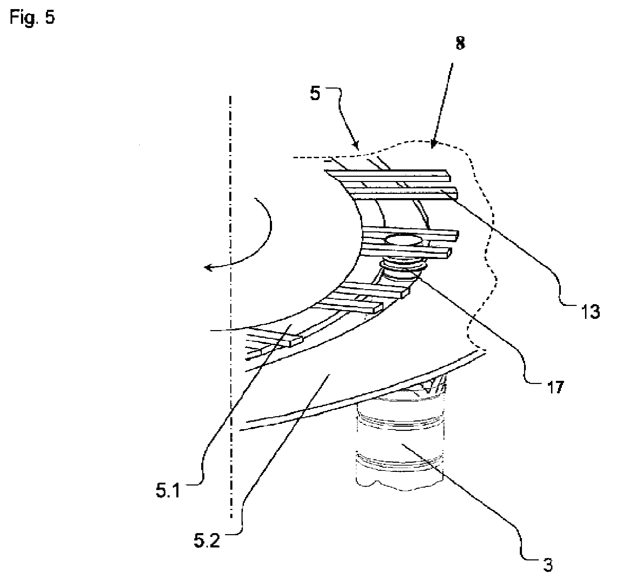

In Figur 5 ist ein Ausschnitt eines Transfersterns 1 dargestellt. Der Transferstern 1 weist die Greif- und Haltelemente 8 auf in Form von Gabeln auf. Es ist die Transportbahn 5 vorgesehen, an welcher die Behälter 3 bzw. die beispielhaften PET-Flaschen 3 mit ihrem Neckring 17 aufliegen. Die Transportbahn 5 weist eine innere Führungsschiene 5.1 und eine äußere Führungsschiene 5.2 auf, zwischen welchen die Behälter (3) hängend und gleitend führ- und transportierbar sind. Angetrieben und positioniert werden die Behälter 3 über die Aufnahmegabeln 12.

In einer nicht dargestellten Ausführungsvariante sind die gabelartigen Greif- und Haltelemente 8, teleskopierbare verlänger- und verkürzbar, so dass sie der radialen Bewegung der Transportbahn 5 folgen können. Zum Verfahren der Gabelzinken kann als Steuerkurve eine oder beide Führungsschienen 5.1 oder 5.2 oder eine weiter Steuerkurve vorgesehen werden.

## Patentansprüche

1. Transferstern, welcher Behälter (3), wie Flaschen oder dergleichen, an einer Übernahme (2) von einer ersten in Sternbauart ausgeführten Behälterbehandlungsvorrichtung (4) übernimmt und zu einer Übergabe (6) transportiert, an welcher der jeweilige Behälter (3) an eine zweite in Sternbauart ausgeführten Behälterbehandlungsvorrichtung (7) übergeben wird, wobei eine Vielzahl von Übertragungselement (8) vorgesehen sind, die als Aufnahmegabeln, an den die Behälter entlang gleiten können, ausgeführt sind, und der Transferstern (1) um eine vertikale Achse rotiert, **dadurch gekennzeichnet, dass**
eine Transportbahn (5) vorgesehen ist, welche mindestens eine innere Führungsschiene (5.1) und eine äußere Führungsschiene (5.2) umfasst, zwischen welchen die Behälter (3) hängend und gleitend führ- und transportierbar sind, wobei an der Übernahme (2) der Behälter (3) ein erster linearer Transportbahnabschnitt (9) vorgesehen ist und wobei ein Behälter (3) beim Transport auf der Transportbahn (5) relativ zu dessen jeweiligen Übertragungselement (8) radial verschiebbar ist, wobei der lineare Transportbahnabschnitt (9) **gekennzeichnet ist durch** einen geraden Bahnabschnitt und/oder einen Bahnabschnitt mit einem Radius, welcher wesentlich größer ist, als der Außenradius des Transfersterns selbst.

2. Transferstern nach Anspruch 1, **dadurch gekennzeichnet, dass** an der Übergabe (6) ein zweiter linearer Transportbahnabschnittes (10) vorgesehen ist, wobei der lineare Transportbahnabschnitt (9) **gekennzeichnet ist durch** einen geraden Bahnabschnitt und/oder einen Bahnabschnitt mit einem Radius, welcher wesentlich größer ist, als der Außenradius des Transfersterns selbst.

3. Transferstern nach Anspruch 1 oder 2, **dadurch gekennzeichnet, dass** die Transportbahn (5) des Behälters (3) entlang einer 2π-periodischen Kurve erfolgt.

4. Transferstern nach einem der vorhergehenden Ansprüche, **dadurch gekennzeichnet, dass** die Transportbahn (5) des Behälters (3) entlang einer Sinuskurve erfolgt.

5. Transferstern nach einem der vorhergehenden Ansprüche, **dadurch gekennzeichnet, dass** die Transportbahn (5) des Behälters (3) entlang einer Parabelfunktion erfolgt.

6. Transferstern nach einem der vorhergehenden Ansprüche, **dadurch gekennzeichnet, dass** zwischen dem ersten und zweiten linearen Transportbahnabschnitt (9,10) ein radialer Transportbahnabschnittes (11) vorgesehen ist.

7. Transferstern nach einem der vorhergehenden Ansprüche, **dadurch gekennzeichnet, dass** die Übertragungselemente (8) als Aufnahmegabeln (12) elastische Gabelzinken (13) aufweisen, welche bevorzugt aus einem elastischen Kunststoff bestehen.

8. Transferstern nach einem der vorhergehenden Ansprüche, **dadurch gekennzeichnet, dass** das als Aufnahmegabel (12) ausgeführte Übertragungselement (8) drehbar ist und/oder schwenkbar gelagert ist und/oder aktiv gegen die Rotationsrichtung des zu übernehmenden Behälters (3) drehbar gelagert oder feststehend sein kann.

## Claims

1. Transfer star-wheel, which, at a takeover point (2), takes containers (3) such as bottles or similar from a first container treatment device (4) configured in the form of a star, and conveys them to a handover point (6), at which the container (3) in question is passed to a second container treatment device (7) configured in the form of a star, wherein a plurality of transmission elements (8) are provided which are configured as takeover forks, at which the containers can glide along, and the transfer star-wheel (1) rotates about a vertical axis,
**characterised in that**
a conveyor path (5) is provided, which comprises at least one inner guide rail (5.1) and one outer guide rail (5.2), between which the containers (3) can be guided and conveyed in a suspended and sliding manner, wherein a first linear conveyor path section (9) is provided at the takeover point (2) of the containers (3), and wherein a container (3), while being conveyed on the conveyor path (5), can be radially displaced relative to the respective transmission element (8) thereof, wherein the linear conveyor path section (9) is **characterized by** a straight path section and/or a path section with a radius which is substantially greater than the outer radius of the transfer star-wheel itself.

2. Transfer star-wheel according to claim 1, **characterised in that** a second linear conveyor path section (10) is provided at the handover point (6), wherein the linear conveyor path section (9) is **characterised by** a straight path section and/or a path section with a radius which is substantially greater than the outer radius of the transfer star-wheel itself.

3. Transfer star-wheel according to claim 1 or 2, **characterised in that** the conveyor path (5) of the container (3) follows along a 2π-periodic curve.

4. Transfer star-wheel according to any one of the preceding claims, **characterised in that** the conveyor path (5) of the container (3) follows along a sinus curve.

5. Transfer star-wheel according to any one of the preceding claims, **characterised in that** the conveyor path (5) of the container (3) follows along a parabola function.

6. Transfer star-wheel according to any one of the preceding claims, **characterised in that** a radial conveyor path section (11) is provided between the first and second linear conveyor path sections (9, 10).

7. Transfer star-wheel according to any one of the preceding claims, **characterised in that** the transmission elements (8) comprise elastic fork prongs (13) as takeover forks (12), which preferably consist of an elastic plastic material.

8. Transfer star-wheel according to any one of the preceding claims, **characterised in that** the transmission element (8), configured as a takeover fork (12) is mounted such as to be capable of rotating and/or pivoting and/or can be mounted such as to be actively rotatable against the rotation direction of the container (3) which is to be taken over, or can be fixed and stationary.

## Revendications

1. Etoile de transfert, qui réceptionne des contenants (3), tels que des bouteilles ou similaires, au niveau d'un poste de réception (2) d'un premier dispositif de traitement de contenants (4) réalisé à la manière d'une structure en étoile et les transporte vers un poste de transfert (6), au niveau duquel le contenant (3) est transféré à un deuxième dispositif de traitement de contenants (7) réalisé à la manière d'une structure en étoile, dans laquelle une pluralité d'éléments de transmission (8) sont prévus, lesquels sont réalisés sous la forme de fourches de logement, le long desquelles les contenants peuvent glisser et l'étoile de transfert (1) tourne autour d'un axe vertical,
**caractérisée en ce**
**qu'**une bande de transport (5) est prévue, laquelle comprend au moins un rail de guidage intérieur (5.1) et un rail de guidage extérieur (5.2), entre lesquels les contenants (3) peuvent être guidés et transportés de manière suspendue et par glissement, dans laquelle un premier segment de bande de transport (9) linéaire est prévu au niveau du poste de réception (2) des contenants (3) et dans laquelle un contenant (3) peut être coulissé, lors du transport sur la bande de transport (5), de manière radiale par rapport à l'élément de transmission (8) de cette dernière, dans laquelle le segment de bande de transport (9) linéaire est **caractérisé par** un segment de bande rectiligne et/ou par un segment de bande présentant un rayon, qui est sensiblement plus grand que le rayon extérieur de l'étoile de transfert elle-même.

2. Etoile de transfert selon la revendication 1, **caractérisée en ce qu'**un deuxième segment de bande de transport (10) linéaire est prévu au niveau du poste de transfert (6), dans laquelle le segment de bande de transport (9) linéaire est **caractérisé par** un segment de bande rectiligne et/ou par un segment de bande présentant un rayon, qui est sensiblement plus grand que le rayon extérieur de l'étoile de transfert.

3. Etoile de transfert selon la revendication 1 ou 2, **caractérisée en ce que** la bande de transport (5) du contenant (3) suit une courbe de période 2π.

4. Etoile de transfert selon l'une quelconque des revendications précédentes, **caractérisée en ce que** la bande de transport (5) du contenant (3) suit une courbe sinusoïdale.

5. Etoile de transfert selon l'une quelconque des revendications précédentes, **caractérisée en ce que** la bande de transport (5) du contenant (3) suit une fonction parabolique.

6. Etoile de transfert selon l'une quelconque des revendications précédentes, **caractérisée en ce qu'**un segment de bande de transport (11) radial est prévu entre le premier et le deuxième segment de bande de transport (9, 10) linéaire.

7. Etoile de transfert selon l'une quelconque des revendications précédentes, **caractérisée en ce que** les éléments de transmission (8) présentent en tant que fourches de logement (12) des dents de fourche (13) élastiques, qui sont constituées de manière préférée d'une matière synthétique élastique.

8. Etoile de transfert selon l'une quelconque des revendications précédentes, **caractérisée en ce que** l'élément de transmission (8) réalisé sous la forme d'une fourche de logement (12) peut tourner et/ou est monté de manière à pouvoir pivoter et/ou peut être monté de manière à pouvoir tourner activement dans le sens opposé au sens de rotation du contenant (3) à réceptionner ou peut être immobilisé.
